# FASCICULE DE BREVET EUROPEEN

(11) **EP 4 486 651 B1**
(45) Date de publication et mention de la délivrance du brevet: **25.02.2026**
(21) Numéro de dépôt: 23703309.7
(22) Date de dépôt: 09.01.2023
(51) Int. Cl.: F41B 7/08, F41F 7/00, B64U 70/50, B64U 70/70, B64U 80/70, B64F 1/06

(54) **DISPOSITIF DE LANCEMENT D'UN DRONE PAR POUSSÉE À RESSORT, PROCÉDÉ DE LANCEMENT DE DRONES À L'AIDE DE CE DISPOSITIF ET OUTIL POUR LA MISE EN OEUVRE DE CE PROCÉDÉ**
VORRICHTUNG ZUM STARTEN EINER DROHNE MITTELS FEDERSCHUB, VERFAHREN ZUM STARTEN VON DROHNEN MIT DIESER VORRICHTUNG UND WERKZEUG ZUR IMPLEMENTIERUNG DIESES VERFAHRENS
DEVICE FOR LAUNCHING A DRONE USING SPRING THRUST, METHOD FOR LAUNCHING DRONES USING THIS DEVICE, AND TOOL FOR IMPLEMENTING THIS METHOD

(30) Priorité: 28.02.2022 FR 2201679
(43) Date de publication de la demande: 08.01.2025
(73) Titulaire: KNDS France, 78034 Versailles Cedex (FR)
(72) Inventeur: GAUTIER, Pierre, 18023 BOURGES (FR)
(74) Mandataire: Cabinet Chaillot
(86) Numéro de dépôt international: PCT/IB2023/050148
(87) Numéro de publication internationale: WO 2023/161729

(56) Documents cités:
- EP-A1- 3 736 523
- CN-A- 103 091 069
- CN-B- 111 572 801
- US-B1- 10 151 555

## Description

Le domaine technique de l'invention est celui des dispositifs de lancement pour drones, et plus spécifiquement, celui des dispositifs de lancement pour drones de type par poussée à ressort.

Les drones ou aéronefs commandés à distance permettent d'emporter une charge utile destinée à des missions à vocation civile ou militaire, de surveillance, de renseignement, de combat ou de transport. Engins volant de taille réduite, moins chers et plus simples à mettre en œuvre qu'un aéronef embarquant un pilote, les drones connaissent un essor important.

Plusieurs moyens de lancement de drone sont connus, parmi lesquels les dispositifs de lancement à tube de lancement.

Le but de ces dispositifs à tube de lancement est de propulser le drone à quelques mètres au-dessus du véhicule portant le tube de lancement pour le déploiement de ce drone. Cela permet d'éviter tout contact du drone avec les antennes montées sur le véhicule et permet une mise en œuvre rapide.

Il existe de nombreux types de dispositifs de lancement à tube de lancement, parmi lesquels les dispositifs de type par poussée à ressort dans lesquels un ressort de compression prend appui contre l'extrémité arrière d'un tube de lancement et appuie sur un élément d'éjection monté coulissant dans le tube de lancement et contre lequel le drone sera placé. On arme le dispositif en comprimant le ressort de compression puis en verrouillant en position l'élément d'éjection, le dispositif étant alors en position armée. Le déverrouillage est commandé par un mécanisme de détente, déverrouillage qui provoque la libération du ressort et le lancement du drone, poussé par l'élément d'éjection.

Un tel type de dispositif de lancement est divulgué dans la demande de brevet chinois CN111572801 A, dans le mécanisme de détente est un mécanisme rotatif entraîné en rotation par un moteur. De même, la compression du ressort, après le lancement du drone, est mise en œuvre par une motorisation intégrée au dispositif et se situant dans le tube de lancement. Un exemple similaire de l'art antérieur est divulgué dans le document CN103091069 A.

Cependant, l'utilisation de tels moyens motorisés augmente le coût et le poids du dispositif de lancement, et ne permet pas d'obtenir une compacité optimale, notamment car ils limitent le volume susceptible d'accueillir un drone dans le tube de lancement.

C'est donc le but de l'invention que de proposer un dispositif de lancement ne présentant pas ces inconvénients.

La solution selon la présente invention repose sur l'utilisation d'un mécanisme de détente comprenant au moins un élément de détente dont le déplacement conduit au déverrouillage de l'élément d'éjection et est obtenu par l'action d'une pression de gaz dans une chambre de détente, ce qui permet notamment de réduire les coûts et le poids du dispositif, et sur l'utilisation d'un outil distinct, non intégré au tube de lancement, pour replacer le dispositif dans la position armée, ce qui permet d'augmenter le volume disponible pour le drone dans le tube de lancement.

La présente invention a donc pour objet un dispositif de lancement d'un drone par poussée à ressort, dispositif comprenant un tube de lancement longitudinal ayant une première extrémité, arrière, qui est fermée et une seconde extrémité, avant, qui est ouverte, et dont l'intérieur définit une chambre de lancement destinée à recevoir un drone, et des moyens d'éjection du drone hors du tube de lancement qui comprennent :
- un ensemble d'éjection comprenant un élément d'éjection, monté coulissant longitudinalement dans la chambre de lancement et destiné à pousser le drone pour l'éjecter hors du tube de lancement, et un ressort de compression, dit d'éjection, ayant un axe longitudinal coaxial à l'axe longitudinal du tube de lancement et dont une première extrémité prend appui sur l'extrémité arrière du tube de lancement et une seconde extrémité appuie contre l'élément d'éjection, l'ensemble d'éjection étant apte à être placé dans une position armée, dans laquelle le ressort d'éjection est comprimé par l'élément d'éjection,
- des moyens de verrouillage pour verrouiller de manière libérable l'ensemble d'éjection dans la position armée, les moyens de verrouillage comprenant au moins un élément de retenue relié au tube de lancement et déplaçable entre une position de verrouillage, dans laquelle l'au moins un élément de retenue est engagé avec l'élément d'éjection de manière à maintenir l'ensemble d'éjection dans la position armée, à l'encontre de l'action du ressort d'éjection, et une position de déverrouillage, dans laquelle l'au moins un élément de retenue est désengagé de l'élément d'éjection, et
- des moyens de commande pour commander le déverrouillage de l'ensemble d'éjection, par déplacement de l'au moins un élément de retenue de la position de verrouillage à la position de déverrouillage,
caractérisé par le fait que les moyens de commande comprennent :
- un logement de détente, situé à l'arrière du tube de lancement et contenant une chambre de détente apte à être reliée à une source de pression de gaz,
- au moins un élément de détente qui, avec le logement de détente, délimite la chambre de détente et est déplaçable, sous l'action d'une pression de gaz introduite dans la chambre de détente, d'une position de repos, dans laquelle l'au moins un élément de détente autorise l'au moins un élément de retenue à rester dans la position de verrouillage, à une position de détente, dans laquelle l'au moins un élément de détente a déplacé l'au moins un élément de retenue de la position de verrouillage à la position de déverrouillage, et
- des moyens de rappel de l'au moins un élément de détente vers la position de repos.

Lesdits moyens de rappel peuvent être des moyens élastiques, comme par exemple un ressort.

De préférence, les moyens de commande sont configurés pour que l'au moins un élément de détente déplace l'au moins un élément de retenue de la position de verrouillage à la position de déverrouillage par déplacement en translation de l'au moins un élément de détente. Selon un mode de réalisation particulier, le logement de détente se présente sous la forme d'un cylindre creux qui est solidaire du tube de lancement et a un axe longitudinal et l'élément de détente est un piston de détente monté dans le logement de détente de manière coulissante selon ledit axe longitudinal, la chambre de détente étant de forme cylindrique et délimitée radialement par le logement de détente et axialement d'un côté par le logement de détente et de l'autre côté par le piston de détente.

Toutefois, la présente invention n'est pas limitée à la manière dont l'au moins un élément de détente se déplace.

L'on pourrait ainsi prévoir un élément de détente qui soit monté rotatif par rapport au logement de détente, autour de l'axe longitudinal du logement de détente. Un tel élément de détente pourra par exemple comprendre une partie formant palette reçue dans le logement de détente et formant une paroi de la chambre de détente, de telle sorte que l'entrée de gaz dans la chambre de détente amène l'élément de détente à tourner. Les moyens de rappel pourront par exemple consister en un ressort de torsion s'étendant autour d'un palier vertical sur lequel est monté rotatif l'élément de détente, et dont une première branche est fixe et dont l'autre branche est solidaire de ladite partie formant palette. Des butées pourront être portées par le logement de détente de façon à définir ladite position de repos et une position de fin de course pour l'élément de détente. L'au moins un élément de retenue sera configuré pour être déplacé de la position de verrouillage à la position de déverrouillage par la rotation de l'élément de détente. Par exemple, chaque élément de retenue est monté pivotant d'une manière analogue au mode de réalisation qui sera décrit ci-après, et l'élément de détente comprendra, s'étendant hors du logement de détente, pour chaque élément de retenue, un organe de type came dimensionné pour venir appuyer sur l'élément de retenue respectif lorsque l'élément de détente est amené à tourner.

Pour améliorer encore la compacité des moyens d'éjection, avantageusement le logement de détente est entouré par le ressort d'éjection, l'au moins un élément de retenue est relié au logement de détente et se situe dans l'espace intérieur du ressort d'éjection, et l'élément d'éjection comprend une tête de poussée qui est perpendiculaire à l'axe longitudinal du tube de lancement et contre laquelle la seconde extrémité du ressort d'éjection appuie, et au moins un organe de maintien qui est solidaire de la tête de poussée et s'étend dans l'espace intérieur du ressort d'éjection, l'au moins un élément de retenue étant configuré pour maintenir l'ensemble d'éjection dans la position armée par saisie de l'au moins un organe de maintien dans la position de verrouillage.

Ainsi, selon un mode de réalisation particulier avantageux de l'ensemble d'éjection, dans lequel l'élément de détente est un piston de détente déplaçable en translation, le logement de détente à un premier côté axial, arrière, qui est fermé et un second côté axial, avant, qui est ouvert et sur lequel est monté de manière amovible un bouchon comprenant un alésage traversant qui est coaxial à l'axe longitudinal du tube de lancement, la chambre de détente étant délimitée axialement par ledit premier côté axial du logement de détente et par un premier côté axial, fermé, du piston de détente, lequel se présente sous la forme d'un cylindre creux dont le second côté axial, avant, est ouvert et formé par une extrémité annulaire, et dont la paroi cylindrique, qui définit un espace intérieur, coulisse contre la paroi cylindrique du logement de détente entre la position de repos, dans laquelle le piston de détente est en appui par son premier côté axial contre un épaulement du logement de détente, et la position de détente, dans laquelle le piston de détente est en appui contre une butée axiale portée par le bouchon, l'au moins un élément de retenue étant porté par le bouchon et, dans la position armée, l'au moins un organe de maintien s'étendant dans le logement de détente en passant par l'alésage traversant du bouchon de façon à pouvoir être saisi par l'au moins un élément de retenue dans la position de verrouillage, l'au moins un élément de retenue étant configuré pour se situer, dans la position de verrouillage, sur le trajet suivi par l'extrémité annulaire du piston de détente lors de son déplacement de la position de repos à la position de détente, de façon à être déplacé de la position de verrouillage à la position de déverrouillage par poussée de l'extrémité annulaire du piston de détente contre l'au moins un élément de retenue.

De préférence, le dispositif comprend un plateau qui se situe dans l'espace intérieur défini par la paroi cylindrique du piston de détente et est fixé au bouchon, et à distance de celui-ci, par des entretoises, le plateau présentant ainsi une première face en regard du premier côté axial du piston de détente et une seconde face, opposée, sur le côté de laquelle se situe l'au moins un élément de retenue, la butée axiale étant portée par la première face du plateau et les moyens de rappel du piston de détente vers la position de repos étant des moyens de rappel élastique, tel qu'un ressort de compression, prenant appui sur la première face du plateau et appuyant contre le premier côté axial du piston de détente.

La présente invention n'est par ailleurs pas limitée à la manière dont l'au moins un élément de retenue se déplace entre la position de verrouillage et la position de déverrouillage. L'on pourrait ainsi prévoir que chaque élément de retenue se déplace en translation.

De préférence, l'au moins un élément de retenue est déplaçable entre la position de verrouillage et la position de déverrouillage par pivotement.

De préférence, le dispositif comprend deux éléments de retenue montés chacun pivotant autour d'un axe de pivotement respectif qui est solidaire dudit bouchon, chaque axe de pivotement appartient à un plan perpendiculaire à l'axe longitudinal du tube de lancement et est perpendiculaire à un plan longitudinal du tube de lancement, le dispositif comprenant en outre des moyens de rappel élastique des éléments de retenue vers la position de verrouillage.

L'organe de maintien peut se présenter sous la forme d'une tige munie d'une gorge circonférentielle apte à recevoir une extrémité de chaque moins un élément de retenue dans la position de verrouillage.

La présente invention a également pour objet un procédé de lancement de drones à l'aide d'un dispositif de lancement par poussée à ressort tel que défini ci-dessus, caractérisé par le fait qu'il comprend les étapes successives suivantes :
- une étape de positionnement, comprenant positionner un drone dans la chambre de lancement, l'ensemble d'éjection étant verrouillé dans la position armée ;
- une étape de lancement du drone, comprenant introduire dans la chambre de détente une pression de gaz suffisante pour déplacer l'élément de détente de la position de repos à la position de détente, ce par quoi l'ensemble d'éjection est déverrouillé et éjecte le drone hors du tube de lancement ; et
- avant la répétition de l'étape de positionnement, une étape de repositionnement, comprenant ramener l'ensemble d'éjection dans la position armée, dans laquelle il est verrouillé par l'au moins un élément de retenue.

La présente invention a également pour objet un outil pour la mise en œuvre du procédé tel que défini ci-dessus, caractérisé par le fait qu'il comprend un chariot déplaçable en translation le long d'au moins un châssis qui présente, à une extrémité, une plaque d'entraînement, le chariot et le châssis étant aptes à être introduits dans la chambre de lancement, après l'étape de lancement, de telle sorte que le chariot est en appui contre l'élément d'éjection et la plaque d'entraînement est en appui contre l'extrémité ouverte du tube de lancement, étant prévus des moyens d'entraînement en translation du chariot le long du châssis, par lesquels le chariot est déplaçable en direction de l'extrémité arrière du tube de lancement de façon à comprimer le ressort d'éjection et à ramener l'ensemble d'éjection dans la position armée.

De préférence, le châssis comprend en outre une plaque de fond apte, en utilisation, à venir en appui contre l'extrémité arrière du tube de lancement, et au moins une tige de guidage reliant la plaque de fond et la plaque d'entraînement et le long de laquelle le chariot est monté mobile en translation, les moyens d'entraînement en translation comprennent une vis sans fin et des moyens d'entraînement en rotation de la vis sans fin, la vis sans fin s'étendant entre la plaque de fond et la plaque d'entraînement, auxquelles elle est reliée de façon à être apte à tourner autour de son axe longitudinal, et passant à travers un trou taraudé du chariot, ce par quoi une rotation de la vis sans fin entraîne une translation du chariot.

Les moyens d'entraînement en rotation peuvent être manuels ou motorisés.

Les moyens d'entraînement en rotation peuvent comprendre un train de pignons monté dans la plaque d'entraînement et relié à un arbre d'entraînement accessible depuis l'extérieur, pour un entraînement manuel par exemple par une manivelle ou un entraînement motorisé, par exemple à l'aide d'une perceuse.

Pour mieux illustrer l'objet de la présente invention, on va en décrire ci-après un mode de réalisation particulier, avec référence aux dessins annexés. Sur ces dessins :
[Fig.1] est une vue de côté, en coupe longitudinale, du dispositif de lancement selon le mode de réalisation particulier de la présente invention, dans la position armée ;
[Fig.2] est une vue de côté, en coupe longitudinale, montrant plus spécifiquement les moyens d'éjection du dispositif de la [Fig.1], selon un plan de coupe perpendiculaire au plan de coupe de la [Fig.1] ;
[Fig.3] est une vue en perspective des moyens de verrouillage en position armée ;
[Fig.4] est une vue en perspective éclatée des moyens de verrouillage de la [Fig.3] ;
[Fig.5] est une vue en perspective de l'outil selon le mode de réalisation particulier de la présente invention ;
[Fig.6] est une vue en perspective de l'outil de la [Fig.5], monté dans la chambre de lancement du dispositif selon l'invention, le tube de lancement étant omis ; et
[Fig.7] est une vue de côté, en coupe longitudinale, de l'outil et du dispositif de lancement dans la même position que celle représentée sur la [Fig.6].

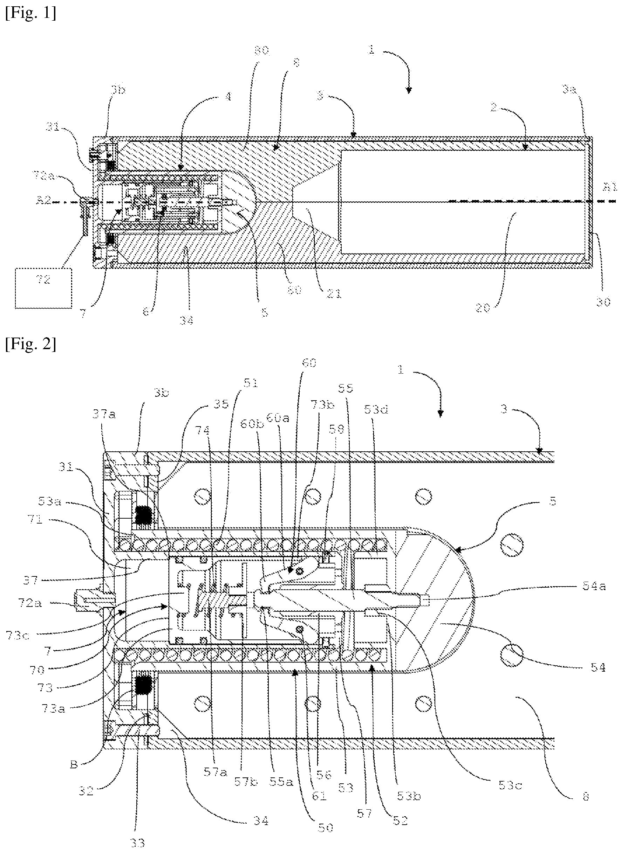

Si l'on se réfère tout d'abord à la [Fig.1], on peut voir que le dispositif 1 de lancement selon la présente invention est destiné au lancement d'un objet de type drone 2.

Un tel drone 2 comprend, de manière classique, un corps de base 20 contenant un groupe motopropulseur, un bloc batterie et une électronique de navigation. Le drone 2 est équipé d'une charge utile 21 montée de manière amovible sur le corps de base 20. Cette charge utile 21 peut être une charge létale ou non létale. Par exemple, le drone 2 pourrait être équipé d'une charge létale de type explosive, d'une charge non létale permettant de lâcher de la peinture ou un fumigène, ou encore d'une charge optronique permettant l'observation et la détection.

Si l'on se réfère désormais aux Figures 1 à 4, on peut voir que le dispositif 1 comprend un tube de lancement 3 d'axe longitudinal A1, destiné à recevoir l'objet à lancer, à savoir le drone 2, avant son lancement, et des moyens d'éjection 4 pour éjecter le drone 2.

Le tube de lancement 3 présente une forme générale cylindrique autour de son axe longitudinal A1, et il a une extrémité avant 3a formant l'embouchure pour la sortie du drone 2 et une extrémité arrière 3b dans la région de laquelle sont agencés les moyens d'éjection 4.

On souligne ici que les termes « avant » et « arrière » s'entendent par référence au sens prédéterminé de déplacement du drone 2 par rapport au tube de lancement 3 lors du lancement.

L'extrémité avant 3a est fermée, avant le lancement, par un bouchon étanche 30 de forme circulaire dont le diamètre correspond au diamètre extérieur du tube de lancement 3.

L'extrémité arrière 3b est fermée par un culot 31 qui se présente sous la forme d'un bloc de section circulaire, dont le diamètre correspond au diamètre externe du tube de lancement 3. Le culot 31 est fixé à un épaulement intérieur 32 du tube de lancement 3, de forme annulaire, par des organes de fixation 33, tels que des vis, traversant des orifices prévus dans le culot 31 et des orifices prévus dans l'épaulement intérieur 32 et situés en regard les uns des autres.

Le tube de lancement 3 défini à l'intérieur de celui-ci une chambre de lancement 34 cylindrique présentant, dans la région de l'extrémité arrière 3b, un siège 35, ici formé par l'épaulement intérieur 32, contre lequel le drone 2 sera placé avant éjection hors du tube de lancement 3 par les moyens d'éjection 4.

Les moyens d'éjection 4 comprennent un ensemble d'éjection 5 apte à être placé dans une position armée, des moyens de verrouillage 6 pour verrouiller de manière libérable l'ensemble d'éjection 5 dans la position armée et des moyens de commande 7 pour commander le déverrouillage de l'ensemble d'éjection 5.

Comme on peut le voir sur les Figures 1 et 2, l'ensemble d'éjection 5 comprend un élément d'éjection 50 et un ressort d'éjection 51 qui consiste en un ressort de compression.

Dans le présent mode de réalisation particulier, l'élément d'éjection 50 se présente sous la forme d'un piston d'éjection 52 ayant un corps de piston 53, une tête de poussée 54 et une tige de maintien 55.

Le corps de piston 53 est un corps cylindrique creux ayant un premier côté axial 53a, dirigé vers l'extrémité arrière 3b du tube de lancement 3, qui est ouvert, et un second côté axial, dirigé vers l'extrémité avant 3a du tube de lancement 3, qui est fermé par une paroi transversale circulaire 53b comportant, en son centre, un orifice. Une saillie centrale 53c annulaire entourant l'orifice s'étend à l'intérieur du piston d'éjection 52, à partir de la paroi transversale 53b. La paroi transversale 53b porte également une saillie extérieure 53d annulaire agencée et dimensionnée de telle sorte que le ressort d'éjection 51 est reçu entre la saillie extérieure 53d et la paroi latérale interne du corps de piston 53.

La tête de poussée 54 est un corps de forme hémisphérique solidaire de la paroi transversale 53b, côté extérieur du corps de piston 53. Le diamètre de la base de ce corps hémisphérique est égal au diamètre extérieur du corps de piston 53. La tête de poussée 54 comporte, en son centre, un orifice 54a disposé en regard de l'orifice de la paroi transversale 53b et dimensionné pour recevoir et bloquer la tige de maintien 55, qui est ainsi rendue solidaire du piston d'éjection 52.

La tige de maintien 55 s'étend selon un axe longitudinal A2 coaxial à l'axe longitudinal A1 et s'étend de manière coulissante dans un alésage cylindrique 56 formé dans un bouchon 57.

Ce bouchon 57 s'étend transversalement à la chambre de lancement 35, à l'intérieur du corps de piston 53. Le bouchon 57 est fixe par rapport au tube de lancement 3. En particulier, le bouchon 57 est fixé, par l'intermédiaire de vis radiales 58, à un côté avant ouvert d'un logement 37 tubulaire, ou étui, s'étendant à partir du culot 31.

Le logement 37 s'étend perpendiculairement à partir de la paroi transversale du culot 31, autrement dit parallèlement audit axe longitudinal A1, en direction de l'extrémité avant 3a du tube de lancement 3. De préférence, le logement 37 est formé d'un seul tenant avec le culot 31.

Le logement 37 est dimensionné de telle sorte qu'il est contenu à l'intérieur du corps de piston 53 dans la position armée de l'ensemble d'éjection 5.

La tige de maintien 55 comporte, au niveau de sa région d'extrémité libre, opposée à sa région d'extrémité reliée au corps de piston 53, une gorge 55a destinée à recevoir les moyens de verrouillage 6 dans la position de verrouillage. La gorge 55a est formée sur la totalité de la circonférence de la tige de maintien 55.

Le ressort d'éjection 51 se situe dans l'espace formé entre la paroi extérieure du logement 37 et la paroi intérieure du corps de piston 53, entre l'extrémité arrière 3b du tube de lancement 3 et la paroi transversale 53b du corps de piston 53. Plus précisément, le ressort d'éjection 51 a une première extrémité prenant appui sur la paroi transversale du culot 31 et une seconde extrémité en appui contre la paroi transversale 53b, rendues solidaires de celles-ci par exemple par tout moyen approprié.

Les moyens de verrouillage 6 permettent de maintenir le ressort d'éjection 51 à l'état comprimé, et donc d'empêcher un coulissement du piston d'éjection 52 vers l'extrémité avant du tube de lancement 3, ce par quoi ils maintiennent l'ensemble d'éjection 5 dans la position armée.

Dans le mode de réalisation particulier représenté sur les Figures 1 à 4, les moyens de verrouillage 6 comprennent deux éléments de retenue 60.

Chaque élément de retenue 60 est monté rotatif autour d'un axe d'articulation 61 solidaire du bouchon 56. Les deux axes d'articulation 61 sont parallèles entre eux. Chaque axe d'articulation 61 est solidaire de deux plaques 59 en vis-à-vis s'étendant perpendiculairement à partir de la paroi transversale du bouchon 56. Ainsi, les axes d'articulation 61 sont orthogonaux à l'axe longitudinal A1.

Chaque élément de retenue 60 se présente sous la forme d'un doigt ayant une section coudée 60a et une section de bec 60b. L'axe d'articulation 61 est reçu dans un trou traversant 60c formé au niveau de l'angle de la section coudée 60a. L'extrémité libre de la section coudée 60a a un profil arrondi. La section de bec 60b a un profil sensiblement en forme de V. Chaque élément de retenue 60 est dimensionné et agencé de telle sorte que l'extrémité libre de la section de bec 60b est apte à être reçue dans la gorge 55a de la tige de maintien 55, et que la région d'extrémité libre de la section coudée 60a est apte à venir en contact avec la paroi intérieure du logement 37.

Les deux éléments de retenue 60 sont disposés dans un même plan passant par l'axe longitudinal A1 et perpendiculaire à la paroi transversale du bouchon 57, les extrémités libres de leur section de bec 60b étant dirigées l'une vers l'autre. Deux ressorts de rappel 62 s'étendent entre les deux éléments de retenue 60. En particulier, deux axes 60d s'étendent de part et d'autre de chaque élément de retenue 60 au niveau de l'angle de la section de bec 60b et parallèlement aux axes d'articulation 61. Un ressort de rappel 62 est monté entre chaque axe 60d en regard. Ces ressort de rappel 62 tendent à ramener les sections de bec 60b des éléments de retenue 60 en direction de la gorge 55a de la tige de maintien 55, donc de solliciter les éléments de retenue 60 vers leur position de verrouillage.

Les moyens de commande 7 sont destinés à commander le déplacement des éléments de retenue 60 vers leur position de déverrouillage, à l'encontre des ressorts de rappel 62, par l'action d'une pression de gaz.

Les moyens de commande 7 comprennent un élément de détente 70 et une chambre de détente 71 apte à être reliée à une source de pression de gaz 72.

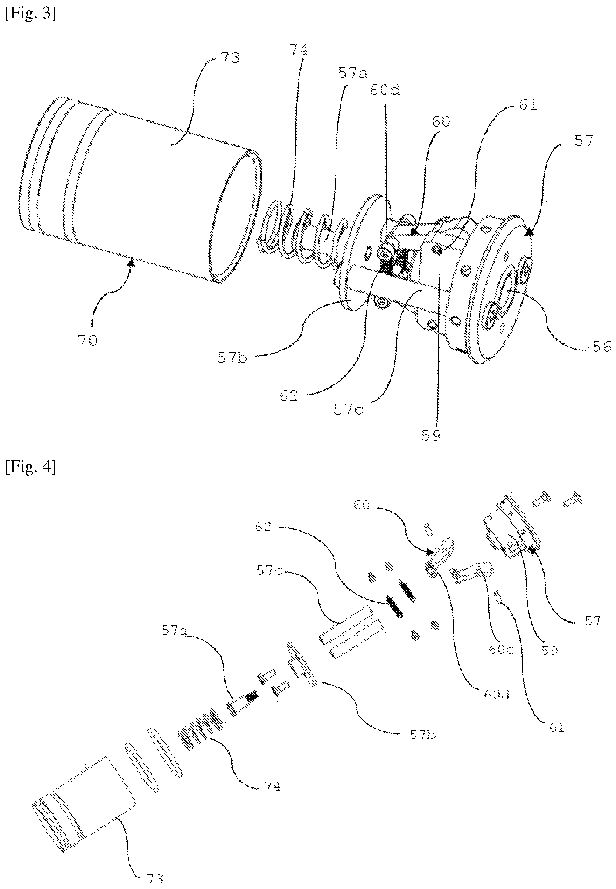

L'élément de détente 70 se présente sous la forme d'un piston de détente 73 monté coulissant dans le logement 37. Comme on peut le voir sur les Figures 3 et 4, le piston de détente 73 est un corps cylindrique creux ayant un premier côté axial, dirigé vers l'extrémité arrière 3b du tube de lancement 3, qui est fermé par une paroi transversale 73a circulaire, et un second côté axial, dirigé vers l'extrémité avant 3a du tube de lancement 3, qui est ouvert et formé par une extrémité annulaire 73c.

Le logement 37 présente un épaulement 37a qui définit une première butée axiale pour le piston de détente 73, contre laquelle la paroi transversale 73a est en contact lorsque le piston de détente 73 est dans la position de repos.

La paroi transversale 73a comporte, en son centre, une partie tubulaire en saillie formant une contre-butée 73c apte à venir en contact avec une butée axiale 57a solidaire du bouchon 57 afin de limiter la course du piston de détente 73, à savoir son coulissement en direction de l'extrémité avant du logement 37. La butée axiale 57a est solidaire d'un plateau 57b circulaire transversal, lui-même solidaire, par l'intermédiaire de deux entretoises 57c, de la paroi transversale du bouchon 57. Les deux entretoises 57c s'étendent sur l'extérieur des plaques 59 portant les axes d'articulation 61 des éléments de retenue 60 et leur longueur est telle que les éléments de retenue 60 ne peuvent pas entrer en contact avec le plateau 57b.

Un ressort de compression 74 s'étend autour de la butée axiale 57a et de la contre-butée 73c, entre le plateau 57b et la paroi transversale 73a du piston de détente 73. Ce ressort 74 est destiné à solliciter le piston de détente 73 vers l'extrémité arrière 3b du tube de lancement 3, autrement dit à l'opposé de la butée axiale 57b. Ainsi, une fois que la chambre de détente 71 n'est plus mise sous pression, le piston de détente 73 est automatiquement ramené vers sa position de repos, à savoir vers une position dans laquelle le piston de détente 73 n'est pas en contact avec les éléments de retenue 60.

La chambre de détente 71 est délimitée radialement par la paroi intérieure du logement 37. La chambre de détente 71 a une extrémité arrière fermée par la paroi transversale du culot 31 et une extrémité avant délimitée par la paroi transversale 73a du piston de détente 73. Le culot 31 comporte un orifice d'admission débouchant dans la chambre de détente 71 et destiné à être relié à une source de pression de gaz 72 par un raccord pneumatique 72a.

La source de pression de gaz 72 est destinée à permettre la mise sous pression de la chambre de détente 71 par du gaz comprimé, qui pourra être de l'air. La source de pression 72 peut être toute source de pression de gaz. Pour des raisons d'encombrement, la source de pression 72 est une source de pression externe, c'est-à-dire qu'elle est disposée à l'extérieur du tube de lancement 3 et est apte à être mise en communication avec la chambre de détente 71 par l'intermédiaire du raccord pneumatique 72a.

Si l'on se réfère à nouveau à la [Fig.1], on peut voir que le dispositif 1 comprend en outre un sabot de lancement 8 destiné à recevoir le drone 2.

Le sabot de lancement 8 est dimensionné et configuré pour être reçu dans la chambre de lancement 34 afin de permettre le guidage du drone 2 dans le tube de lancement 3 lors de la phase de lancement, et pour entourer le drone 2 afin de permettre de protéger le drone 2 lors du lancement. Il convient de souligner qu'un sabot 8 différent est défini suivant le profil du drone 2 et de sa charge utile 21.

Dans le mode de réalisation particulier représenté, le sabot 8 est formé de plusieurs segments 80 séparables, par exemple quatre segments 80 identiques. Ces segments 80 délimitent entre eux un espace de réception de drone 2 ayant une ouverture destinée à être située en regard de l'extrémité avant 3a du tube de lancement 3. Ces segments 80 délimitent également entre eux un espace de réception des moyens d'éjection 4, ayant une ouverture destinée à permettre le passage des moyens d'éjection 4 lorsque le sabot 8 est introduit dans la chambre de lancement 34.

En variante, le sabot peut être formé de quatre segments séparables, dont trois segments identiques et un segment contenant un dispositif de recharge et de communication entre le drone et le tube de lancement. Le sabot étant destiné à être éjecté hors du tube de lancement et à se désolidariser du drone après le lancement, le dispositif de recharge et de communication est un dispositif sans fil. De préférence, ce dispositif est de type inductif et une bobine d'émission B ([Fig.2]) est solidaire du culot 31 et apte à coopérer, par l'intermédiaire dudit dispositif, avec une bobine réceptrice logée dans le drone.

Le dispositif 1 de lancement selon la présente invention permet le lancement de drones 2 de manière aisée, rapide et fiable, le procédé de lancement comprenant une phase de pré-lancement, une phase de lancement et une phase de post-lancement.

Lors de la phase de pré-lancement, on introduit tout d'abord le sabot de lancement 8, dans l'espace de réception duquel est reçu le drone 2, par l'extrémité avant 3a ouverte du tube de lancement 3, jusqu'à venir le placer en contact contre le siège 35, puis l'on ferme l'extrémité avant 3a du tube de lancement 3 par le bouchon étanche 30.

Lors de cette phase, les moyens d'éjection 4 se placent dans l'espace de réception des moyens d'éjection du sabot 8. En particulier, l'ensemble d'éjection 5 est dans la position armée, le ressort d'éjection 51 étant comprimé, les éléments de retenue 60 étant en position de verrouillage et le piston de détente 73 n'est pas en contact avec les éléments de retenue 60.

Lorsque l'on souhaite lancer le drone 2, lors de la phase de lancement, il suffit de mettre sous pression la chambre de détente 71. La pression contenue dans la chambre de détente 71 va alors pousser le piston de détente 73 en direction des éléments de retenue 60, jusqu'à ce que la contre-butée 73c du piston de détente 73 vienne en appui contre la butée axiale 57a. Au cours de ce mouvement de coulissement, l'extrémité annulaire 73b du piston de détente 73 vient en contact contre l'extrémité de profil arrondie des éléments de retenue 60 et pousse celles-ci vers l'intérieur, amenant les éléments de retenue 60 à tourner dans un sens tendant à éloigner les sections de bec 60b vis-à-vis de la gorge 54a. Une fois les éléments de retenue 60 désengagés de la tige de maintien 55, donc en position de déverrouillage, la tige de maintien 55 se trouve libéré et le piston d'éjection 52 se retrouve libre de coulisser et ne maintient plus le ressort d'éjection 51 à l'état comprimé. Le ressort d'éjection 51 est donc libéré instantanément et sa détente provoque le coulissement soudain du piston d'éjection 52 en direction de l'extrémité avant 3a du tube de lancement 3. Dans cette position, la tête de poussée 53 vient appliquer un effort de poussée contre le sabot 8, éjectant ainsi le sabot 8 et le drone 2 qu'il contient hors du tube de lancement 3.

Une fois éjecté hors du tube de lancement 3, le sabot 8 se désolidarise en segments 80 séparés. Une fois à son apogée, le drone 2 démarre, se stabilise et sa mission peut commencer.

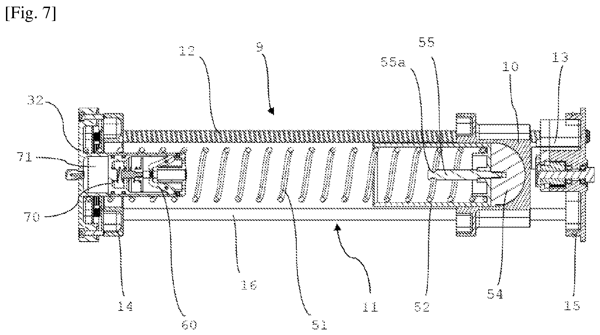

Comme on peut le voir sur la [Fig.7], lorsque le sabot 8 et le drone 2 sont éjectés hors du tube de lancement 3, le piston d'éjection 50 se trouve à proximité de l'extrémité avant 3a du tube de lancement 3, le ressort d'éjection 51 étant dans son état de détente maximale. Suite à la mise à l'échappement de la chambre de détente 71, le piston de détente 73 a été ramené à la position de repos par le ressort 73, permettant aux ressorts de rappel 62 de faire pivoter les éléments de retenue 60 vers l'intérieur.

Lors de la phase de post-lancement, il convient de préparer le dispositif 1 de lancement en vue du lancement d'un autre drone 2, autrement dit, de repositionner l'ensemble d'éjection 5 dans sa position armée, au cours de laquelle le ressort d'éjection 51 est à nouveau comprimé.

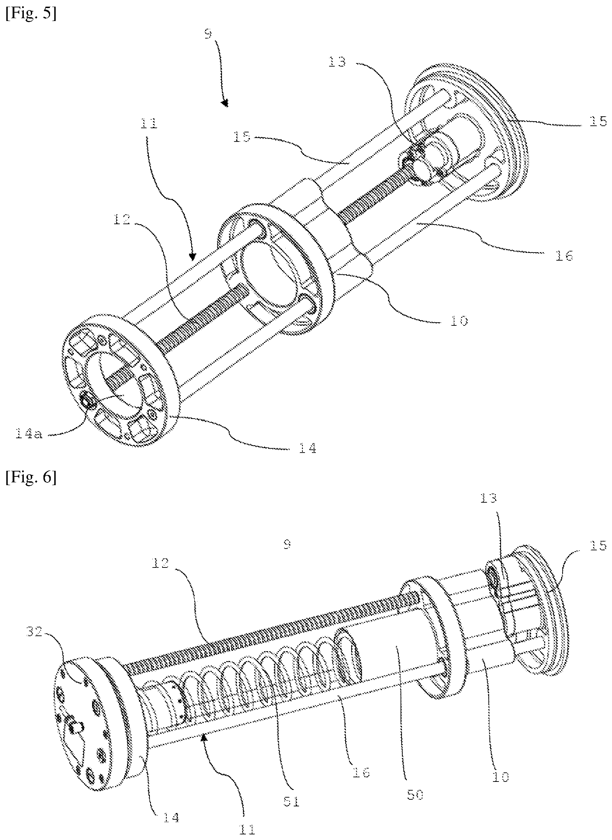

Cette phase est mise en œuvre par l'outil 9 selon un mode de réalisation particulier de la présente invention, représenté sur les Figures 5 à 7.

Comme on peut le voir sur la [Fig.5], l'outil 9 comprend un chariot 10 et un châssis 11 le long duquel le chariot 10 est déplaçable en translation par l'intermédiaire de moyens d'entraînement en translation.

Les moyens d'entraînement en translation comprennent une vis sans fin 12 et un train de pignons 13.

La vis sans fin 12 est montée entre une plaque de fond 14 et une plaque d'entraînement 15 qui sont liées entre elles par deux tiges de guidage 16 qui font partie du châssis 11.

La plaque de fond 14 est une plaque circulaire dont le diamètre externe est inférieur au diamètre interne du tube de lancement 3. La plaque de fond 14 présente un alésage 14a cylindrique central dont le diamètre est supérieur au diamètre extérieur du piston d'éjection 52.

La plaque d'entraînement 15 est également une plaque circulaire apte à s'adapter sur l'extrémité avant ouverte 3a du tube de lancement 3, donc de même dimension que le bouchon étanche 30.

La plaque d'entraînement 15 intègre le train de pignons 13, dont un pignon est en prise avec le filet de la vis sans fin 12, de telle sorte que la commande du train de pignons 13 permet d'entraîner en rotation la vis sans fin 12.

Le chariot 10 est traversé par les deux tiges de guidage 16, passant à travers deux alésages du chariot 10, et par la vis sans fin 12, passant à travers un trou taraudé, de telle sorte qu'une rotation de la vis sans fin 12 entraîne un déplacement en translation du chariot 10 le long des tiges de guidage 16.

Le chariot 10 a un diamètre extérieur égal au diamètre de la plaque de fond 14. Le chariot 10 comporte une partie de réception, apte à recevoir et à enfermer la tête de poussée 54 et la région d'extrémité avant du corps de piston 53.

En pratique, comme on peut le voir sur la [Fig.7], lors de la phase de post-lancement, l'outil 9 est positionné dans le tube de lancement 3. Plus précisément, la plaque de fond 14 est positionnée contre le siège 35, avec son alésage 14a entourant le ressort d'éjection 51, la plaque d'entraînement 15 est positionnée au niveau de l'extrémité avant 3a du tube de lancement 3 et le chariot 10 coiffe la tête de poussée 54. Le train de pignons 13 est actionné, manuellement ou de manière motorisée, pour mettre en rotation la vis sans fin 12. Le chariot 10 est alors déplacé en translation, en direction de l'extrémité arrière 3b du tube de lancement 3. Le chariot 10 coiffant la tête de poussée 54, le déplacement du chariot 10 provoque le déplacement progressif de la tête de poussée 54 et donc de la tige de maintien 55 en direction de l'extrémité arrière 3b, comprimant ainsi le ressort d'éjection 51. Lorsque la tige de maintien 55 entre en contact avec les éléments de retenue 60, la tige de maintien 55 les fait tout d'abord tourner à l'encontre des ressorts de rappel 62, puis les éléments de retenue 60 s'engagent automatiquement dans la gorge 55a dès que les sections de bec 60b sont en regard de celle-ci. Le ressort d'éjection 51 est alors placé dans son état comprimé et l'ensemble d'éjection 5 est dans sa position armée, prêt pour une nouvelle phase de lancement.

L'outil 9 est retiré du tube de lancement 3 et un nouveau sabot 8 peut ensuite être positionné dans la chambre de lancement 35, et les phases précédentes répétées pour le lancement de ce drone 2 et d'autres drones.

Il est bien entendu que le mode de réalisation particulier qui vient d'être décrit a été donné à titre indicatif et non limitatif, et que des modifications peuvent être apportées sans que l'on s'écarte pour autant du cadre de la présente invention, telle que revendiquée.

## Revendications

1. Dispositif (1) de lancement d'un drone (2) par poussée à ressort, dispositif (1) comprenant un tube de lancement (3) longitudinal ayant une première extrémité (3b), arrière, qui est fermée et une seconde extrémité (3a), avant, qui est ouverte, et dont l'intérieur définit une chambre de lancement (34) destinée à recevoir un drone (2), et des moyens (4) d'éjection du drone (2) hors du tube de lancement (3) qui comprennent :
- un ensemble d'éjection (5) comprenant un élément d'éjection (50), monté coulissant longitudinalement dans la chambre de lancement (34) et destiné à pousser le drone (2) pour l'éjecter hors du tube de lancement (3), et un ressort de compression, dit d'éjection (51), ayant un axe longitudinal coaxial à l'axe longitudinal (A1) du tube de lancement (3) et dont une première extrémité prend appui sur l'extrémité arrière (3b) du tube de lancement (3) et une seconde extrémité appuie contre l'élément d'éjection (50), l'ensemble d'éjection (5) étant apte à être placé dans une position armée, dans laquelle le ressort d'éjection (51) est comprimé par l'élément d'éjection (50),
- des moyens de verrouillage (6) pour verrouiller de manière libérable l'ensemble d'éjection (5) dans la position armée, les moyens de verrouillage (6) comprenant au moins un élément de retenue (60) relié au tube de lancement (3) et déplaçable entre une position de verrouillage, dans laquelle l'au moins un élément de retenue (60) est engagé avec l'élément d'éjection (50) de manière à maintenir l'ensemble d'éjection (5) dans la position armée, à l'encontre de l'action du ressort d'éjection (51), et une position de déverrouillage, dans laquelle l'au moins un élément de retenue (60) est désengagé de l'élément d'éjection (50), et
- des moyens de commande (7) pour commander le déverrouillage de l'ensemble d'éjection (5), par déplacement de l'au moins un élément de retenue (60) de la position de verrouillage à la position de déverrouillage,
**caractérisé par le fait que** les moyens de commande (7) comprennent :
- un logement de détente (37), situé à l'arrière du tube de lancement (3) et contenant une chambre de détente (71) apte à être reliée à une source de pression de gaz (72),
- au moins un élément de détente (70) qui, avec le logement de détente (37), délimite la chambre de détente (71) et est déplaçable, sous l'action d'une pression de gaz introduite dans la chambre de détente (71), d'une position de repos, dans laquelle l'au moins un élément de détente (70) autorise l'au moins un élément de retenue (60) à rester dans la position de verrouillage, à une position de détente, dans laquelle l'au moins un élément de détente (70) a déplacé l'au moins un élément de retenue (60) de la position de verrouillage à la position de déverrouillage, et
- des moyens (74) de rappel de l'au moins un élément de détente (70) vers la position de repos.

2. Dispositif (1) selon la revendication 1, **caractérisé par le fait que** le logement de détente (37) se présente sous la forme d'un cylindre creux qui est solidaire du tube de lancement (3) et a un axe longitudinal et l'élément de détente (70) est un piston de détente (73) monté dans le logement de détente (37) de manière coulissante selon ledit axe longitudinal, la chambre de détente (71) étant de forme cylindrique et délimitée radialement par le logement de détente (37) et axialement d'un côté par le logement de détente (37) et de l'autre côté par le piston de détente (73).

3. Dispositif (1) selon l'une quelconque des revendications 1 et 2, **caractérisé par le fait que** le logement de détente (37) est entouré par le ressort d'éjection (51), l'au moins un élément de retenue (60) est relié au logement de détente (37) et se situe dans l'espace intérieur du ressort d'éjection (51), et l'élément d'éjection (50) comprend une tête de poussée (54) qui est perpendiculaire à l'axe longitudinal (A1) du tube de lancement (3) et contre laquelle la seconde extrémité du ressort d'éjection (51) appuie, et au moins un organe de maintien (55) qui est solidaire de la tête de poussée (54) et s'étend dans l'espace intérieur du ressort d'éjection (51), l'au moins un élément de retenue (60) étant configuré pour maintenir l'ensemble d'éjection (5) dans la position armée par saisie de l'au moins un organe de maintien (55) dans la position de verrouillage.

4. Dispositif (1) selon la revendication 3, prise en dépendance de la revendication 2, **caractérisé par le fait que** le logement de détente (37) à un premier côté axial, arrière, qui est fermé et un second côté axial, avant, qui est ouvert et sur lequel est monté de manière amovible un bouchon (57) comprenant un alésage traversant (56) qui est coaxial à l'axe longitudinal (A1) du tube de lancement (3), la chambre de détente (71) étant délimitée axialement par ledit premier côté axial du logement de détente (37) et par un premier côté axial (73a), fermé, du piston de détente (73), lequel se présente sous la forme d'un cylindre creux dont le second côté axial, avant, est ouvert et formé par une extrémité annulaire (73b), et dont la paroi cylindrique, qui définit un espace intérieur, coulisse contre la paroi cylindrique du logement de détente (37) entre la position de repos, dans laquelle le piston de détente (73) est en appui par son premier côté axial (73a) contre un épaulement (37a) du logement de détente (37), et la position de détente, dans laquelle le piston de détente (73) est en appui contre une butée axiale (57a) portée par le bouchon (57), l'au moins un élément de retenue (60) étant porté par le bouchon (57) et, dans la position armée, l'au moins un organe de maintien (55) s'étendant dans le logement de détente (71) en passant par l'alésage traversant (56) du bouchon (57) de façon à pouvoir être saisi par l'au moins un élément de retenue (60) dans la position de verrouillage, l'au moins un élément de retenue (60) étant configuré pour se situer, dans la position de verrouillage, sur le trajet suivi par l'extrémité annulaire (73b) du piston de détente (73) lors de son déplacement de la position de repos à la position de détente, de façon à être déplacé de la position de verrouillage à la position de déverrouillage par poussée de l'extrémité annulaire (73b) du piston de détente (73) contre l'au moins un élément de retenue (60).

5. Dispositif (1) selon la revendication 4, **caractérisé par le fait qu'**il comprend un plateau (57b) qui se situe dans l'espace intérieur défini par la paroi cylindrique du piston de détente (73) et est fixé au bouchon (57), et à distance de celui-ci, par des entretoises (57c), le plateau (57b) présentant ainsi une première face en regard du premier côté axial (73a) du piston de détente (73) et une seconde face, opposée, sur le côté de laquelle se situe l'au moins un élément de retenue (60), la butée axiale (57a) étant portée par la première face du plateau (57b) et les moyens de rappel (74) du piston de détente (73) vers la position de repos étant des moyens de rappel élastique, tel qu'un ressort de compression, prenant appui sur la première face du plateau (57b) et appuyant contre le premier côté axial (73a) du piston de détente (73).

6. Dispositif (1) selon l'une quelconque des revendications 1 à 5, **caractérisé par le fait que** l'au moins un élément de retenue (60) est déplaçable entre la position de verrouillage et la position de déverrouillage par pivotement.

7. Dispositif (1) selon la revendication 6, prise en dépendance de la revendication 4 ou 5, **caractérisé par le fait qu'**il comprend deux éléments de retenue (60) montés chacun pivotant autour d'un axe de pivotement (61) respectif qui est solidaire du bouchon (57), chaque axe de pivotement (61) appartient à un plan perpendiculaire à l'axe longitudinal (A1) du tube de lancement (3) et est perpendiculaire à un plan longitudinal du tube de lancement (3), le dispositif (1) comprenant en outre des moyens (62) de rappel élastique des éléments de retenue (60) vers la position de verrouillage.

8. Procédé de lancement de drones (2) à l'aide d'un dispositif (1) de lancement par poussée à ressort tel que défini à l'une quelconque des revendications 1 à 7, **caractérisé par le fait qu'**il comprend les étapes successives suivantes :
- une étape de positionnement, comprenant positionner un drone (2) dans la chambre de lancement (34), l'ensemble d'éjection (5) étant verrouillé dans la position armée ;
- une étape de lancement du drone (2), comprenant introduire dans la chambre de détente (71) une pression de gaz suffisante pour déplacer l'élément de détente (70) de la position de repos à la position de détente, ce par quoi l'ensemble d'éjection (5) est déverrouillé et éjecte le drone (2) hors du tube de lancement (3) ; et
- avant la répétition de l'étape de positionnement, une étape de repositionnement, comprenant ramener l'ensemble d'éjection (5) dans la position armée, dans laquelle il est verrouillé par l'au moins un élément de retenue (60).

9. Outil (9) pour la mise en œuvre du procédé tel que défini à la revendication 8, **caractérisé par le fait qu'**il comprend un chariot (10) déplaçable en translation le long d'au moins un châssis (11) qui présente, à une extrémité, une plaque d'entraînement (15), le chariot (10) et le châssis (11) étant aptes à être introduits dans la chambre de lancement (34), après l'étape de lancement, de telle sorte que le chariot (10) est en appui contre l'élément d'éjection (50) et la plaque d'entraînement (15) est en appui contre l'extrémité ouverte (3a) du tube de lancement (3), étant prévus des moyens (12, 13) d'entraînement en translation du chariot (10) le long du châssis (11), par lesquels le chariot (10) est déplaçable en direction de l'extrémité arrière (3b) du tube de lancement (3) de façon à comprimer le ressort d'éjection (51) et à ramener l'ensemble d'éjection (5) dans la position armée.

10. Outil (9) selon la revendication 9, **caractérisé par le fait que** le châssis (11) comprend en outre une plaque de fond (14) apte, en utilisation, à venir en appui contre l'extrémité arrière (3b) du tube de lancement (3), et au moins une tige de guidage (16) reliant la plaque de fond (14) et la plaque d'entraînement (15) et le long de laquelle le chariot (10) est monté mobile en translation, les moyens (12, 13) d'entraînement en translation comprennent une vis sans fin (12) et des moyens (13) d'entraînement en rotation de la vis sans fin (12), la vis sans fin (12) s'étendant entre la plaque de fond (14) et la plaque d'entraînement (15), auxquelles elle est reliée de façon à être apte à tourner autour de son axe longitudinal, et passant à travers un trou taraudé du chariot (10), ce par quoi une rotation de la vis sans fin (12) entraîne une translation du chariot (10).

## Patentansprüche

1. - Vorrichtung (1) zum Starten einer Drohne (2) durch Federschub, die Vorrichtung (1) umfassend ein längliches Startrohr (3), das ein erstes hinteres Ende (3b), das geschlossen ist, und ein zweites vordere Ende (3a), das offen ist, aufweist, und deren Inneres eine Startkammer (34) definiert, die dazu bestimmt ist, eine Drohne (2) aufzunehmen, und Einrichtungen (4) zum Auswerfen der Drohne (2) aus dem Startrohr (3), die Folgendes umfassen:
- eine Auswurfeinheit (5), umfassend ein Auswurfelement (50), das in Längsrichtung verschiebbar in der Startkammer (34) montiert ist und dazu bestimmt ist, die Drohne (2) zu schieben, um sie aus dem Startrohr (3) auszuwerfen, und eine Druckfeder, die sogenannte Auswurffeder (51), die eine Längsachse koaxial zu der Längsachse (A1) des Startrohrs (3) aufweist und wovon ein erstes Ende an dem hinteren Ende (3b) des Startrohrs (3) anliegt und ein zweites Ende gegen das Auswurfelement (50) drückt, wobei die Auswurfanordnung (5) in eine scharfgestellte Position gebracht werden kann, in der die Auswurffeder (51) durch das Auswurfelement (50) zusammengedrückt ist,
- Verriegelungseinrichtungen (6) zum lösbaren Verriegeln der Auswurfanordnung (5) in der scharfgestellten Position, die Verriegelungseinrichtungen (6) umfassend mindestens ein Halteelement (60), das mit dem Startrohr (3) verbunden und zwischen einer Verriegelungsposition, in der das mindestens eine Halteelement (60) mit dem Auswurfelement (50) in Eingriff ist, um die Auswurfanordnung (5) gegen die Wirkung der Auswurffeder (51) in der scharfgestellten Position zu halten, und einer Entriegelungsposition, in der das mindestens eine Halteelement (60) von dem Auswurfelement (50) gelöst ist, bewegbar ist, und
- Steuerungseinrichtungen (7) zum Steuern der Entriegelung der Auswurfanordnung (5) durch Bewegen des mindestens einen Halteelements (60) aus der Verriegelungsposition in die Entriegelungsposition,
**dadurch gekennzeichnet, dass** die Steuerungseinrichtungen (7) Folgendes umfassen:
- eine Auslöseaufnahme (37), die sich an der Rückseite des Startrohrs (3) befindet und eine Auslösekammer (71) enthält, die geeignet ist, um mit einer Gasdruckquelle (72) verbunden zu werden,
- mindestens ein Auslöseelement (70), das zusammen mit der Auslöseaufnahme (37) die Auslösekammer (71) begrenzt und unter der Wirkung eines in die Auslösekammer (71) eingeleiteten Gasdrucks aus einer Ruheposition, in der das mindestens eine Auslöseelement (70) dem mindestens einen Halteelement (60) erlaubt, in der Verriegelungsposition zu bleiben, in eine Auslöseposition, in der das mindestens eine Auslöseelement (70) das mindestens eine Halteelement (60) aus der Verriegelungsposition in die Entriegelungsposition bewegt hat, bewegbar ist, und
- Einrichtungen (74) zum Zurückholen des mindestens einen Auslöseelements (70) in die Ruheposition.

2. - Vorrichtung (1) nach Anspruch 1, **dadurch gekennzeichnet, dass** die Auslöseaufnahme (37) in Form eines Hohlzylinders vorliegt, der fest mit dem Startrohr (3) verbunden ist und eine Längsachse aufweist, und das Auslöseelement (70) ein Auslösekolben (73) ist, der in der Auslöseaufnahme (37) entlang der Längsachse verschiebbar montiert ist, wobei die Auslösekammer (71) zylindrisch geformt ist und radial durch die Auslöseaufnahme (37) und axial auf einer Seite durch die Auslöseaufnahme (37) und auf der anderen Seite durch den Auslösekolben (73) begrenzt ist.

3. - Vorrichtung (1) nach einem der Ansprüche 1 oder 2, **dadurch gekennzeichnet, dass** die Auslöseaufnahme (37) von der Auswurffeder (51) umgeben ist, das mindestens eine Halteelement (60) mit der Auslöseaufnahme (37) verbunden ist und sich in dem Innenraum der Auswurffeder (51) befindet, und das Auswurfelement (50) einen Druckkopf (54), der senkrecht zu der Längsachse (A1) des Startrohrs (3) ist und an dem das zweite Ende der Auswurffeder (51) anliegt, und mindestens ein Halteelement (55), das fest mit dem Druckkopf (54) verbunden ist und sich in den Innenraum der Auswurffeder (51) erstreckt, umfasst, das mindestens eine Halteelement (60) konfiguriert ist, um die Auswurfanordnung (5) in der scharfgestellten Position zu halten, indem es das mindestens eine Halteelement (55) in der Verriegelungsposition ergreift.

4. - Vorrichtung (1) nach Anspruch 3, genommen in Abhängigkeit von Anspruch 2, **dadurch gekennzeichnet, dass** die Auslöseaufnahme (37) eine erste, hintere, axiale Seite, die geschlossen ist, und eine zweite, vordere, axiale Seite, die offen ist, und an der ein Stopfen (57) abnehmbar angebracht ist, aufweist, umfassend eine Durchgangsbohrung (56), die koaxial zu der Längsachse (A1) des Startrohrs (3) ist, wobei die Auslösekammer (71) axial durch die erste axiale Seite der Auslöseaufnahme (37) und durch eine erste, geschlossene axiale Seite (73a) des Auslösekolbens (73) begrenzt ist, der die Form eines Hohlzylinders aufweist, dessen zweite, vordere axiale Seite offen ist und durch ein ringförmiges Ende (73b) gebildet ist, und dessen Zylinderwand, die einen Innenraum definiert, an der Zylinderwand der Auslöseaufnahme (37) zwischen der Ruhestellung, in der der Auslösekolben (73) mit seiner ersten axialen Seite (73a) an einer Schulter (37a) der Auslöseaufnahme (37) anliegt, und der Auslöseposition gleitet, in der der Auslösekolben (73) an einem axialen Anschlag (57a) anliegt, der von dem Stopfen (57) getragen wird, wobei das mindestens eine Halteelement (60) von dem Stopfen (57) getragen wird und in der scharfgestellten Position das mindestens eine Halteelement (55) sich durch die Durchgangsbohrung (56) des Stopfens (57) in die Auslöseaufnahme (71) erstreckt, um von dem mindestens einen Halteelement (60) in der Verriegelungsposition eingegriffen zu werden, das mindestens eine Halteelement (60) so konfiguriert ist, um in der Verriegelungsposition auf dem Weg zu sein, dem das ringförmige Ende (73b) des Auslösekolbens (73) bei seiner Bewegung von der Ruheposition in die Auslöseposition folgt, um von der Verriegelungsposition in die Entriegelungsposition bewegt zu werden, indem das ringförmige Ende (73b) des Auslösekolbens (73) gegen das mindestens eine Halteelement (60) gedrückt wird.

5. - Vorrichtung (1) nach Anspruch 4, **dadurch gekennzeichnet, dass** sie eine Platte (57b) umfasst, die sich in dem Innenraum befindet, der durch die zylindrische Wand des Auslösekolbens (73) definiert ist, und an dem Stopfen (57) und durch Abstandhalter (57c) in einem Abstand davon befestigt ist, wobei die Platte (57b) somit eine erste Seite aufweist, die der ersten axialen Seite (73a) des Auslösekolbens (73) zugewandt ist, und eine zweite, gegenüberliegende Seite, auf deren Seite sich das mindestens eine Halteelement (60) befindet, wobei der axiale Anschlag (57a) von der ersten Seite der Platte (57b) getragen wird und die Rückholeinrichtungen (74) des Auslösekolbens (73) in Richtung der Ruhestellung elastische Rückholeinrichtungen sind, wie beispielsweise eine Druckfeder, die an der ersten Seite der Platte (57b) anliegen und gegen die erste axiale Seite (73a) des Auslösekolbens (73) drücken.

6. - Vorrichtung (1) nach einem der Ansprüche 1 bis 5, **dadurch gekennzeichnet, dass** das mindestens eine Halteelement (60) durch Schwenken zwischen der Verriegelungsposition und der Entriegelungsposition bewegbar ist.

7. - Vorrichtung (1) nach Anspruch 6, genommen in Abhängigkeit von Anspruch 4 oder 5, **dadurch gekennzeichnet, dass** sie zwei Halteelemente (60) umfasst, die jeweils schwenkbar um eine jeweilige Schwenkachse (61) montiert sind, die fest mit dem Stopfen (57) verbunden ist, wobei jede Schwenkachse (61) zu einer Ebene senkrecht zu der Längsachse (A1) des Startrohrs (3) gehört und senkrecht zu einer Längsebene des Startrohrs (3) ist, die Vorrichtung (1) ferner umfassend Einrichtungen (62) zum elastischen Zurückholen der Halteelemente (60) in die Verriegelungsposition.

8. - Verfahren zum Starten von Drohnen (2) mittels einer Vorrichtung (1) zum Starten durch Federschub, wie definiert in einem der Ansprüche 1 bis 7, **dadurch gekennzeichnet, dass** es die folgenden aufeinanderfolgenden Schritte umfasst:
- einen Positionierungsschritt, umfassend ein Positionieren einer Drohne (2) in der Startkammer (34), wobei die Auswurfanordnung (5) in scharfgestellter Position verriegelt ist;
- einen Schritt zum Starten der Drohne (2), umfassend ein Einleiten eines Gasdrucks in die Auslösekammer (71), der ausreichend ist, um das Auslöseelement (70) aus der Ruheposition in die Auslöseposition zu bewegen, wodurch die Auswurfanordnung (5) entriegelt wird und die Drohne (2) aus dem Startrohr (3) auswirft; und
- vor der Wiederholung des Positionierungsschritts einen Neupositionierungsschritt, umfassend ein Zurückholen der Auswurfanordnung (5) in die scharfgestellte Position, in der sie durch das mindestens eine Halteelement (60) verriegelt ist.

9. - Werkzeug (9) zum Durchführen des Verfahrens, wie definiert in Anspruch 8, **dadurch gekennzeichnet, dass** es einen Schlitten (10) umfasst, der entlang mindestens eines Rahmens (11), der an einem Ende eine Antriebsplatte (15) aufweist, translatorisch bewegbar ist, wobei der Schlitten (10) und der Rahmen (11) geeignet sind, um nach dem Startschritt in die Abschusskammer (34) eingeführt zu werden, sodass der Schlitten (10) in Anlage an dem Auswurfelement (50) ist und die Antriebsplatte (15) in Anlage an dem offenen Ende (3a) des Startrohrs (3) ist, wobei Einrichtungen (12, 13) zum translatorischen Antrieb des Schlittens (10) entlang des Rahmens (11) bereitgestellt sind, durch die der Schlitten (10) in Richtung des hinteren Endes (3b) des Startrohrs (3) bewegbar ist, um die Auswurffeder (51) zu komprimieren und die Auswurfanordnung (5) in die scharfgestellte Position zurückzubringen.

10. - Werkzeug (9) nach Anspruch 9, **dadurch gekennzeichnet, dass** der Rahmen (11) ferner eine Bodenplatte (14), die im Gebrauch geeignet ist, um an dem hinteren Ende (3b) des Startrohrs (3) in Anlage zu kommen, und mindestens eine Führungsstange (16), die die Bodenplatte (14) und die Antriebsplatte (15) verbindet und entlang derer der Schlitten (10) translatorisch bewegbar montiert ist, umfasst, wobei die Einrichtungen (12, 13) zum translatorischen Antrieb eine Schnecke (12) und Einrichtungen (13) zum Drehantrieb der Schnecke (12) umfassen, wobei sich die Schnecke (12) zwischen der Bodenplatte (14) und der Antriebsplatte (15) erstreckt, mit denen sie verbunden ist, um in der Lage zu sein, um um ihre Längsachse zu drehen, und durch ein Gewindeloch des Schlittens (10) verläuft, wodurch eine Drehung der Schnecke (12) eine Translation des Schlittens (10) bewirkt.

## Claims

1. - A device (1) for launching a drone (2) using spring thrust, the device (1) comprising a longitudinal launch tube (3) having a first rear end (3b), which is closed, and a second front end (3a), which is open, and the inside of which defines a launch chamber (34) intended to receive a drone (2), and means (4) for ejecting the drone (2) from the launch tube (3) which comprise:
- an ejection assembly (5) comprising an ejection element (50), mounted so as to slide longitudinally in the launch chamber (34) and intended to push the drone (2) in order to eject it from the launch tube (3), and a compression spring, referred to as an ejection spring (51), having a longitudinal axis coaxial with the longitudinal axis (A1) of the launch tube (3) and a first end of which bears on the rear end (3b) of the launch tube (3) and a second end of which bears against the ejection element (50), the ejection assembly (5) being able to be placed in an armed position, in which the ejection spring (51) is compressed by the ejection element (50),
- locking means (6) for releasably locking the ejection assembly (5) in the armed position, the locking means (6) comprising at least one retaining element (60) connected to the launch tube (3) and movable between a locking position, in which the at least one retaining element (60) is engaged with the ejection element (50) so as to hold the ejection assembly (5) in the armed position, against the action of the ejection spring (51), and an unlocking position, in which the at least one retaining element (60) is disengaged from the ejection element (50), and
- control means (7) for controlling unlocking of the ejection assembly (5), by moving the at least one retaining element (60) from the locking position to the unlocking position,
**characterized in that** the control means (7) comprise:
- a release housing (37), located at the rear of the launch tube (3) and containing a release chamber (71) able to be connected to a gas pressure source (72),
- at least one release element (70) which, together with the release housing (37), delimits the release chamber (71) and is movable, under the action of a gas pressure introduced into the release chamber (71), from a rest position in which the at least one release element (70) allows the at least one retaining element (60) to remain in the locking position, to a release position, in which the at least one release element (70) moved the at least one retaining element (60) from the locking position to the unlocking position, and
- means (74) for returning the at least one release element (70) to the rest position.

2. - The device (1) according to claim 1, **characterized in that** the release housing (37) is formed as a hollow cylinder that is integral with the launch tube (3) and has a longitudinal axis, and the release element (70) is a release piston (73) mounted in the release housing (37) so as to slide along said longitudinal axis, the release chamber (71) being cylindrical in shape and delimited radially by the release housing (37) and axially on one side by the release housing (37) and on the other side by the release piston (73).

3. - The device (1) according to any one of claims 1 and 2, **characterized in that** the release housing (37) is surrounded by the ejection spring (51), the at least one retaining element (60) is connected to the release housing (37) and is located in the interior space of the ejection spring (51), and the ejection element (50) comprises a thrust head (54) that is perpendicular to the longitudinal axis (A1) of the launch tube (3) and against which the second end of the ejection spring (51) bears, and at least one holding member (55) that is integral with the thrust head (54) and extends into the interior space of the ejection spring (51), the at least one retaining element (60) being configured to hold the ejection assembly (5) in the armed position by gripping the at least one holding member (55) in the locking position.

4. - The device (1) according to claim 3, when depending on claim 2, **characterized in that** the release housing (37) has a first rear axial side, which is closed, and a second front axial side, which is open and on which is removably mounted a plug (57) comprising a through bore (56) that is coaxial with the longitudinal axis (A1) of the launch tube (3), the release chamber (71) being delimited axially by said first axial side of the release housing (37) and by a first axial side (73a), closed, of the release piston (73), which is formed as a hollow cylinder, the second front axial side of which is open and formed by an annular end (73b), and the cylindrical wall of which, which defines an interior space, slides against the cylindrical wall of the release housing (37) between the rest position, in which the release piston (73) abuts by its first axial side (73a) against a shoulder (37a) of the release housing (37), and the release position, in which the release piston (73) abuts against an axial stop (57a) carried by the plug (57), the at least one retaining element (60) being carried by the plug (57) and, in the armed position, the at least one holding member (55) extending into the release housing (71) through the through bore (56) of the plug (57) so that it can be gripped by the at least one retaining element (60) in the locking position, the at least one retaining element (60) being configured to be located, in the locking position, on the path followed by the annular end (73b) of the release piston (73) during its movement from the rest position to the release position, so as to be moved from the locking position to the unlocking position by the annular end (73b) of the release piston (73) pushing against the at least one retaining element (60).

5. - The device (1) according to claim 4, **characterized in that** it comprises a plate (57b) which is located in the interior space defined by the cylindrical wall of the release piston (73) and is fixed to the plug (57), and at a distance therefrom, by spacers (57c), the plate (57b) thus having a first face facing the first axial side (73a) of the release piston (73) and a second opposite face on the side of which the at least one retaining element (60) is located, the axial stop (57a) being carried by the first face of the plate (57b) and the means (74) for returning the release piston (73) to the rest position being elastic return means, such as a compression spring, bearing on the first face of the plate (57b) and pressing against the first axial side (73a) of the release piston (73).

6. - The device (1) according to any one of claims 1 to 5, **characterized in that** the at least one retaining element (60) is movable between the locking position and the unlocking position by pivoting.

7. - The device (1) according to claim 6, when depending on claim 4 or 5, **characterized in that** it comprises two retaining elements (60) each pivotally mounted about a respective pivot pin (61) which is integral with the plug (57), each pivot pin (61) belongs to a plane perpendicular to the longitudinal axis (A1) of the launch tube (3) and is perpendicular to a longitudinal plane of the launch tube (3), the device (1) further comprising means (62) for elastically returning the retaining elements (60) to the locking position.

8. - A method for launching drones (2) using a launch device (1) using spring thrust as defined in any one of claims 1 to 7, **characterized in that** it comprises the following successive steps:
- a positioning step, comprising positioning a drone (2) in the launch chamber (34), the ejection assembly (5) being locked in the armed position;
- a step of launching the drone (2), comprising introducing into the release chamber (71) sufficient gas pressure to move the release element (70) from the rest position to the release position, whereby the ejection assembly (5) is unlocked and ejects the drone (2) from the launch tube (3); and
- before the positioning step is repeated, a repositioning step, comprising returning the ejection assembly (5) to the armed position, in which it is locked by the at least one retaining element (60).

9. - A tool (9) for implementing the method as defined in claim 8, **characterized in that** it comprises a carriage (10) movable in translation along at least one frame (11) which has, at one end, a drive plate (15), the carriage (10) and the frame (11) being able to be introduced into the launch chamber (34), after the launching step, such that the carriage (10) bears against the ejection element (50) and the drive plate (15) bears against the open end (3a) of the launch tube (3), translation driving means (12, 13) being provided for driving the carriage (10) in translation along the frame (11), by means of which the carriage (10) is movable towards the rear end (3b) of the launch tube (3) so as to compress the ejection spring (51) and return the ejection assembly (5) to the armed position.

10. - The tool (9) according to claim 9, **characterized in that** the frame (11) further comprises a bottom plate (14) able, in use, to bear against the rear end (3b) of the launch tube (3), and at least one guide rod (16) connecting the bottom plate (14) and the drive plate (15) and along which the carriage (10) is mounted movable in translation, the translation driving means (12, 13) comprise a worm screw (12) and means (13) for driving the worm screw (12) in rotation, the worm screw (12) extending between the bottom plate (14) and the drive plate (15), to which it is connected so as to be rotatable about its longitudinal axis, and passing through a threaded hole in the carriage (10), whereby rotation of the worm screw (12) results in translation of the carriage (10).
